(19) Europäisches Patentamt
European Patent Office
Office européen des brevets

(11) **EP 4 752 507 A1**

(12) **EUROPEAN PATENT APPLICATION**

(43) Date of publication:
**03.06.2026 Bulletin 2026/23**

(21) Application number: **25218872.7**

(22) Date of filing: **26.11.2025**

(51) International Patent Classification (IPC):
***G01D 5/353*** (2006.01)

(52) Cooperative Patent Classification (CPC):
**G01D 5/35316**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.11.2024 CN 202411747421**

(71) Applicants:
• **Airbus (Beijing) Engineering Centre Company Limited**
  **Beijing 101312 (CN)**
• **AIRBUS OPERATIONS (S.A.S.)**
  **31060 Toulouse (FR)**

(72) Inventors:
• **JIANG, Wenchao**
  **Beijing, 101312 (CN)**
• **MENNEBEUF, Laetitia**
  **31060 TOULOUSE (FR)**
• **TWITCHETT, Adrian**
  **31060 TOULOUSE (FR)**
• **LU, Zhixing**
  **Beijing, 101312 (CN)**
• **LIU, Zhengzheng**
  **Beijing, 101312 (CN)**

(74) Representative: **Abel & Imray LLP**
  **Westpoint Building**
  **James Street West**
  **Bath BA1 2DA (GB)**

(54) **SENSOR SYSTEM, AEROFOIL ARRANGEMENT, AIRCRAFT AND RELATED METHODS**

(57) The present application relates to a sensor system for an aerofoil, a related aerofoil arrangement, an aircraft and a method. The sensor system includes an optical fiber sensor, a light source, an optical circulator and a signal processing device. The optical fiber sensor is configured to be attached to the aerofoil blade and includes an optical fiber core. The optical fiber core includes a first half and a second half divided by a virtual plane extending in an axial direction of the optical fiber core, and a first Bragg grating and a second Bragg grating with different grating periods are etched in the first half and the second half, respectively. The light source is connected to a first port of the optical circulator, an upstream side of the optical fiber sensor is connected to a second port of the optical circulator, and the signal processing device is connected to a third port of the optical circulator. The optical fiber sensor receives light emitted by the light source and reflects an optical signal associated with central wavelengths of the first Bragg grating and the second Bragg grating to the signal processing device. The signal processing device calculates deformation amount and/or temperature of the optical fiber sensor based on the optical signal.

**FIG. 5**

## Description

### FIELD

The present application relates to the technical field of sensors, and in particular to a sensor system for detecting deformation amount and/or temperature of an aerofoil, a related aerofoil arrangement, an aircraft, a method for manufacturing the aerofoil and a measuring method.

### BACKGROUND

The contents of this part provide only background information relevant to the present application, which may not constitute the conventional technology.

For a rotatable or movable aerofoil, such as a blade of an engine fan or a propeller of an aircraft, a wing slat or flap, a blade of a wind turbine or the like, and for any other form of fixed aerofoil structure for e.g a wing etc, it may be required to detect deformation amount of the aerofoil, for example, for testing the aerodynamic performance of the aerofoil or for health monitoring during the operation to prevent the aerofoil from being overloaded. Fiber Bragg Grating (FBG) sensor may be used to convert the deformation amount of the aerofoil into an optical signal to detect the deformation amount of the aerofoil. For example, at least one fiber Bragg grating, used as a strain sensor, may be attached to a aerofoil surface, and the deformation amount of the grating may be regarded as equal to the deformation amount of the aerofoil surface. When the light passes through the fiber Bragg grating, the light near the specific central wavelength will be reflected by the grating. The central wavelength of the reflected light is related to the grating period and may offset due to the influence of grating strain and temperature. Therefore, the deformation amount of the aerofoil may be measured by measuring the central wavelength offset of the reflected light caused by grating strain. Since the central wavelength offset of the reflected light is not only related to the grating strain, but also related to the temperature, it is generally necessary to provide another fiber Bragg grating as a temperature sensor to measure the temperature, so as to compensate for the error of the central wavelength offset of the reflected light caused by the temperature. Similarly, when measuring temperature, it is also necessary to compensate for the error of the central wavelength offset of the reflected light caused by the grating deformation.

In conventional design, the number and position of the temperature sensors and the strain sensors are generally not corresponded with each other. For example, generally multiple strain sensors are arranged at different positions to measure the strains of various points. However, only one temperature sensor is provided to measure the temperature. In this case, the temperature measured by the temperature sensor may be different from the temperature of the position where the strain sensor is located, and the deformation amount of the temperature sensor and the deformation amount of the strain sensor may also be different from each other, which lead to inaccurate measurement. In particular, for the aerofoil with large-size and/or high-speed, the temperature at different positions of the aerofoil may vary greatly, and some positions of the aerofoil (such as the tip) may be greatly deformed, as a result of which large measurement errors may occur. If a corresponding temperature sensor is provided at the position on the aerofoil where a corresponding strain sensor is located, the difficulty of mounting, operating and maintaining the sensor system will be increased. For example, sensor wiring, signal transmission and signal processing will become more difficult. In this case, the cost is increased and the sensor system becomes very complicated. In addition, it is generally necessary to provide two interrogators to demodulate the signals from the optical fiber of the strain sensor and the optical fiber of the temperature sensor respectively, which also increases the cost and complexity of the system.

On the other hand, the solution of arranging the fiber Bragg grating sensor on the aerofoil surface changes the geometry of the aerodynamic surface of the aerofoil, which may have an adverse effect on the aerodynamic performance of the aerofoil.

### SUMMARY

An object of the present application is to improve the accuracy of strain and/or temperature measurement of an aerofoil. Another object of the present application is to simplify the structure of the strain and/or temperature measuring system of the aerofoil. Yet another object of the present application is to avoid damaging the aerodynamic performance of the aerofoil during the strain and/or temperature measurement of the aerofoil.

A sensor system for an aerofoil is provided according to a first aspect of the present application. The sensor system includes an optical fiber sensor, a light source, an optical circulator and a signal processing device. The optical fiber sensor is configured for attachment to the aerofoil. The optical fiber sensor includes an optical fiber core, which includes a first half and a second half divided by a virtual plane extending along an axial direction of the optical fiber core. A first Bragg grating and a second Bragg grating are etched in the first half and the second half respectively, and the first Bragg grating and the second Bragg grating have grating periods different from each other. The optical circulator has a first port, a second port and a third port. The light source is connected to the first port, an upstream side of the optical fiber sensor is connected to the second port, and the signal processing device is connected to the third port. The optical fiber sensor is configured to receive light emitted by the light source and reflect an optical signal associated with a central wavelength of the first Bragg grating and a central wavelength of the second Bragg grating to the signal processing device. The signal processing device is configured to calculate deformation amount and/or temperature of the optical fiber sensor based on the optical signal.

In some embodiments, the sensor system may include multiple optical fiber sensors connected in series with each other, and all of the Bragg gratings in the multiple optical fiber sensors have grating periods different from each other and have operating wavelength ranges that do not overlap with each other.

In some embodiments, the optical fiber sensor may be attached to an outer surface of the aerofoil.

In some embodiments, the optical fiber sensor may be embedded inside the aerofoil.

In some embodiments, the signal processing device may include a single interrogator configured to convert an optical signal into an electrical signal.

In some embodiments, the sensor system may further include a data receiving device and a data storage device. The data receiving device is configured to communicate with the signal processing device in a wired or wireless manner to receive data from the signal processing device. The data storage device is configured to communicate with the data receiving device in a wired or wireless manner to store data.

In some embodiments, the data storage device may be configured as cloud storage.

In some embodiments, the first half and the second half may be symmetrical about a central axis of the optical fiber core.

In some embodiments, the optical fiber sensor may further include an optical fiber cladding surrounding the optical fiber core, and the optical fiber core and the optical fiber cladding may be formed of same material.

In some embodiments, the optical fiber sensor may further include an outer coating surrounding a radial outer side of the optical fiber cladding.

A sensor system for an aerofoil is further provided according to a second aspect of the present application. The sensor system includes an optical fiber sensor, a light source, an optical circulator and a signal processing device. The optical fiber sensor is configured to be attached to the aerofoil. A pair of Bragg gratings arranged in an axial direction and not overlapping with each other in an axial direction is provided in the optical fiber sensor, and the pair of Bragg gratings have grating periods different from each other. The optical circulator has a first port, a second port and a third port. The light source is connected to the first port, an upstream side of the optical fiber sensor is connected to the second port, and the signal processing device is connected to the third port. The optical fiber sensor is configured to receive light emitted by the light source and reflect an optical signal associated with a central wavelength of each of the pair of Bragg gratings to the signal processing device. The signal processing device is configured to calculate deformation amount and/or temperature of the optical fiber sensor based on the optical signal.

An aerofoil arrangement is provided according to a third aspect of the present application. The aerofoil arrangement includes at least one aerofoil and the sensor system according to the first aspect or the second aspect described above. The optical fiber sensor of the sensor system is coupled to the aerofoil, and the sensor system is configured to detect deformation amount and/or temperature of the aerofoil.

In some embodiments, the aerofoil may include at least one of: a rotatable blade of a propeller mechanism; a wing moveable, a fixed wing, a winglet and a tail stabilator of an aircraft,

In some embodiments, the aerofoil arrangement may be configured as a propeller mechanism including at least one rotatable aerofoil and the signal processing device may be arranged at or near a rotation axis of the propeller mechanism.

An aircraft is provided according to a fourth aspect of the present application. The aircraft includes the sensor system according to the first aspect or the second aspect described above or the aerofoil arrangement according to the third aspect described above.

A method for manufacturing an aerofoil is provided according to a fifth aspect of the present application. The method includes: forming an optical fiber sensor by etching a first Bragg grating and a second Bragg grating in a first half and a second half of an optical fiber divided by a virtual plane extending in an axial direction, respectively; and sequentially laminating and bonding multiple composite material layers to form the aerofoil, so that the optical fiber sensor is arranged between two adjacent composite material layers. Alternatively the optical fiber sensor may be arranged in a cavity formed by the aerofoil. The cavity may be machined from the aerofoil once it is manufactured, or may be created during the forming process of the aerofoil.

In some embodiments, the method may further include forming multiple optical fiber sensors connected in series with each other in the same optical fiber and arranging the optical fiber between two adjacent composite material layers.

A method for measuring deformation amount of an aerofoil is provided according to a sixth aspect of the present application. The method includes: providing an optical fiber sensor at a position to be measured of the aerofoil, where the optical fiber sensor includes an optical fiber core which includes a first half and a second half divided by a virtual plane extending along an axial direction of the optical fiber core, a first Bragg grating and a second Bragg grating are etched in the first half and the second half respectively, and the first Bragg grating and the second Bragg grating have different grating periods; enabling the light emitted by the light source to pass through the optical fiber sensor; receiving a first optical signal reflected by the first Bragg grating and a second optical signal reflected by the second Bragg grating; measuring an offset $\Delta\lambda_1$ of a central wavelength of the first optical signal relative to a predetermined initial central wavelength of reflected light of the first Bragg grating and an offset $\Delta\lambda_2$ of a central wavelength of the second optical signal relative to a predetermined initial central wavelength of reflected light of the second Bragg grating; calculating a common strain change $\Delta\varepsilon$ of the first Bragg grating and the second Bragg grating based on the offset $\Delta\lambda_1$ of the central wavelength of the first optical signal and the offset $\Delta\lambda_2$ of the central wavelength of the second optical signal; and calculating the deformation amount $\Delta L$ of the aerofoil at the position to be measured based on the strain change $\Delta\varepsilon$.

In some embodiments, the strain change $\Delta\varepsilon$ and the deformation $\Delta L$ may be calculated from the following equations:

$$\Delta\varepsilon = \frac{K_{T2}\Delta\lambda_1 - K_{T1}\Delta\lambda_2}{K_{T2}K_{\varepsilon1} - K_{T1}K_{\varepsilon2}}$$

$$\Delta L = \Delta\varepsilon * L$$

where $K_{\varepsilon1}$ is a strain coefficient of the first Bragg grating, $K_{\varepsilon2}$ is a strain coefficient of the second Bragg grating, $K_{T1}$ is a temperature coefficient of the first Bragg grating, $K_{T2}$ is a temperature coefficient of the second Bragg grating, and L is an initial length of the optical fiber sensor when no external force is received.

A method for measuring the temperature of an aerofoil is provided according to a seventh aspect of the present application. The method includes: arranging an optical fiber sensor at a position to be measured of the aerofoil, where the optical fiber sensor includes an optical fiber core which includes a first half and a second half divided by a virtual plane extending along an axial direction of the optical fiber core, a first Bragg grating and a second Bragg grating are etched in the first half and the second half respectively, and the first Bragg grating and the second Bragg grating have grating periods different from each other; enabling the light emitted by the light source to pass through the optical fiber sensor; receiving a first optical signal reflected by the first Bragg grating and a second optical signal reflected by the second Bragg grating; measuring an offset $\Delta\lambda_1$ of a central wavelength of the first optical signal relative to a predetermined initial central wavelength of reflected light of the first Bragg grating and an offset $\Delta\lambda_2$ of a central wavelength of the second optical signal relative to a predetermined initial central wavelength of reflected light of the second Bragg grating; calculating a common temperature change $\Delta T$ of the first Bragg grating and the second Bragg grating based on the offset $\Delta\lambda_1$ of the central wavelength of the first optical signal and the offset $\Delta\lambda_2$ of the central wavelength of the second optical signal; and calculating the temperature T of the aerofoil at the position to be measured based on the temperature change $\Delta T$.

In some embodiments, the temperature change $\Delta T$ and the temperature T are calculated from the following equations:

$$\Delta T = \frac{K_{\varepsilon2}\Delta\lambda_1 - K_{\varepsilon1}\Delta\lambda_2}{K_{\varepsilon2}K_{T1} - K_{\varepsilon1}K_{T2}}$$

$$T = T_0 + \Delta T$$

where $K_{\varepsilon1}$ is a strain coefficient of the first Bragg grating, $K_{\varepsilon2}$ is a strain coefficient of the second Bragg grating, $K_{T1}$ is a temperature coefficient of the first Bragg grating, $K_{T2}$ is a temperature coefficient of the second Bragg grating, and $T_0$ is an initial value of the temperature at the position to be measured.

An optical fiber sensor with a pair of Bragg gratings is provided according to the present application, and based on two different reflected light wavelength signals reflected by the pair of Bragg gratings, the deformation amount and the temperature at the position to be measured may be measured simultaneously. Therefore, two associated variables, i.e., the deformation amount and the temperature, may be decoupled during the measurement, which eliminates the measurement error and improves the measurement accuracy. In addition, the present application also significantly simplifies the structure of the strain measurement sensor system. In particular, the optical fiber sensor according to the present application may be embedded into the aerofoil, which may measure the deformation amount and temperature of the aerofoilwithout affecting the aerodynamic performance of the aerofoil.

## BRIEF DESCRIPTION OF THE DRAWINGS

The embodiments of the present application will be described below with reference to the drawings by way of example. In the drawings, the same features or components are denoted by the same reference numerals, and the drawings are not necessarily drawn to scale. In the accompanying drawings:

FIG. 1 is a schematic view of a sensor system according to an embodiment of the present application;

FIG. 2 is a longitudinal sectional view of a first optical fiber sensor in the sensor system of FIG. 1 taken along a central axis;

FIG. 3 is a cross-sectional view of the first optical fiber sensor taken in a direction perpendicular to the central axis;

FIG. 4 is a plan view of an aircraft equipped with the sensor system according to an embodiment of the present application;

FIG. 5 is a schematic cutaway perspective view of an engine of the aircraft shown in FIG. 4;

FIG. 6 schematically shows a manufacturing process of a blade of a fan of the engine of the aircraft according to an embodiment of the present application;

FIG. 7 is a schematic longitudinal sectional view taken along the central axis of the engine manufactured in a manner shown in FIG. 6;

FIG. 8 shows a flowchart of a method for manufacturing an aerofoil according to an embodiment of the present application;

FIG. 9a is a schematic view of an optical fiber sensor according to an embodiment of the present application when it is subjected to a tensile force; and

FIG. 9b is a schematic view of an optical fiber sensor according to an embodiment of the present application when it is subjected to a compressive force.

## DETAILED DESCRIPTION OF THE EMBODIMENTS

The following description is essentially exemplary only, rather than intended to limit the present application and the application or usage thereof. It should be appreciated that, throughout all drawings, similar reference signs indicate the same or similar parts or features. Each of the drawings only illustratively shows the concept and principle of the embodiments of the present application, and does not necessarily show the specific dimensions and scales of various embodiments of the present application. Specific parts in specific drawings may be exaggerated to illustrate related details or structures of embodiments of the present application.

In the description of the embodiments of the present application, the orientation terms related to "upper", and "lower" used herein are described according to the upper and lower position relationships of the views shown in the accompanying drawings. In practical applications, the positional relationships of "upper" and "lower" used herein may be defined based on actual conditions. These relationships may be reversed.

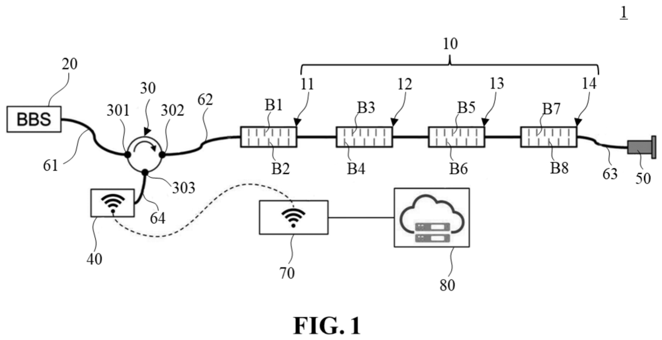

FIG. 1 is a schematic view of a sensor system 1 according to an embodiment of the present application. As shown in FIG. 1, the sensor system 1 may generally include at least one optical fiber sensors 10, a light source 20, an optical circulator 30 and a signal processing device 40. Each of the optical fiber sensors 10 is formed of an optical fiber etched with a pair of Bragg gratings arranged in an axial direction and not overlapping each other in the axial direction, and its specific structure will be further described below. The sensor system 1 may include multiple optical fiber sensors 10 connected in series with each other, so as to carry out measurements at various different positions at the same time. The multiple optical fiber sensors 10 may share a same set of light source 20, optical circulator 30 and signal processing device 40 to simplify the structure of the sensor system 1 and reduce the number of parts. In this embodiment, the multiple optical fiber sensors 10 include a first optical fiber sensor 11, a second optical fiber sensor 12, a third optical fiber sensor 13 and a fourth optical fiber sensor 14 connected in series from an upstream side (that is, the side close to the light source 20) to a downstream side (that is, the side away from the light source 20), each of which includes a pair of Bragg gratings B1 to B8. A plug 50 may be connected to the downstream side of the fourth optical fiber sensor 14 to protect the fiber end. In other embodiments, it is possible to use the optical fiber sensors with any suitable number.

The light source 20 may include a broad spectrum laser source (BBS). In particular, a wavelength range of the light emitted by the light source 20 should cover an operating wavelength range of each Bragg grating of all optical fiber sensors 10, that is, the range where the central wavelength of the reflected light of each Bragg grating may change during the measurement.

The optical circulator 30 is a multi-port optical device with non-reciprocal characteristics, which is used to sequentially guide the light from one port to the next port in one direction. That is, when an optical signal is inputted from any port, the optical signal will be outputted from the next port with little loss. In this embodiment, the optical circulator 30 has three ports. The optical signal inputted from the first port 301 of the optical circulator 30 may only be outputted from a second port 302, and the optical signal inputted from the second port 302 may only be outputted from a third port 303, and so on. As shown in FIG. 1, the light source 20 is coupled to the first port 301 of the optical circulator 30 via a first transmission optical fiber 61. The upstream side of the first optical fiber sensor 11 among the multiple optical fiber sensors 10 is coupled to the second port 302 of the optical circulator 30 via a second transmission optical fiber 62, and the downstream side of the fourth optical fiber sensor 14 is coupled to the plug 50 via a third transmission optical fiber 63. The signal processing device 40 is coupled to the third port 303 of the optical circulator 30 via a fourth transmission optical fiber 64. The signal processing device 40 may include, for example, an interrogator configured to convert a received optical signal (such as a reflected optical wavelength signal of respective Bragg grating) into an electrical signal.

As shown in FIG. 1, the sensor system 1 may further include a data receiving device 70 and a data storage device 80. The data receiving device 70 is configured to communicate with the signal processing device 40 in a wired or wireless manner to receive data from the signal processing device 40. The data storage device 80 is configured to communicate with the data receiving device 70 in a wired or wireless manner to store data. Preferably, in this embodiment, the data storage device 80 is configured as cloud storage. In other embodiments, the data storage device 80 may also be configured as any other suitable storage medium, such as volatile memory, nonvolatile memory, hard disk, floppy disk, optical disk, magnetic tape and the like. In some embodiments, the data receiving device 70 and the data storage device 80 may be integrated into a single device.

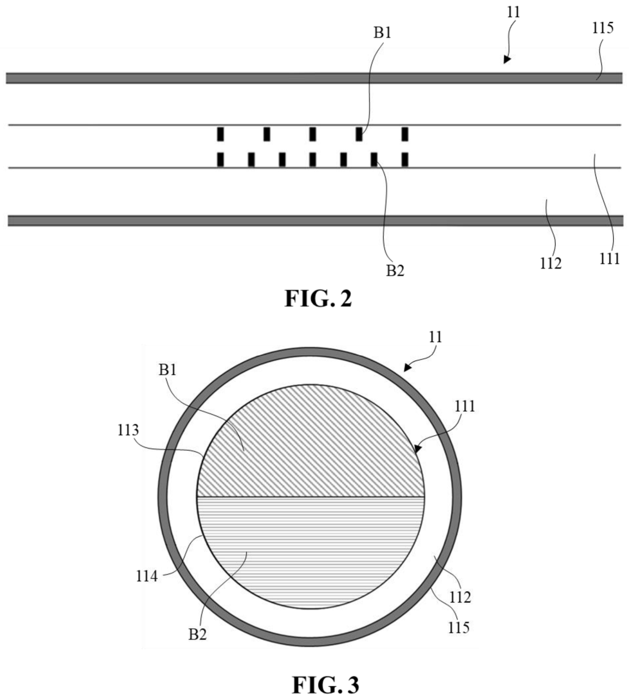

Each of the optical fiber sensors 10 may have generally the same structure, so only the first optical fiber sensor 11 will be described hereinafter as an example. FIG. 2 is a longitudinal sectional view of the first optical fiber sensor 11 in FIG. 1 taken along a central axis, and FIG. 3 is a cross-sectional view of the first optical fiber sensor 11 taken in a direction perpendicular to the central axis.

As shown in FIG. 2 and FIG. 3, the first optical fiber sensor 11 is constructed of a length of the optical fiber. The first optical fiber sensor 11 may include an optical fiber core 111 and an optical fiber cladding 112 surrounding the optical fiber core 111. The optical fiber core 111 and the optical fiber cladding 112 may be formed of the same material, such as silicon dioxide. The optical fiber core 111 may be used to etch gratings and transmit optical signals, and the optical fiber cladding 112 may be used to protect the optical fiber core 111 and prevent the optical signals in the optical fiber core 111 from being lost. The optical fiber core 111 includes a first half 113 and a second half 114 divided by a virtual plane extending along its axial direction. Preferably, the first half 113 and the second half 114 are symmetrical about the central axis of the optical fiber core 111, so that the first half 113 and the second half 114 may have exactly the same deformation amount when deformed by force. In this embodiment, the optical fiber core 111 is circular in cross-section, and therefore the first half 113 and the second half 114 are configured as two semicircles divided along a diameter direction of the optical fiber core 111. In other embodiments, the optical fiber with a non-circular cross section, for example, a polygonal cross-section, may also be used. A first Bragg grating B1 and a second Bragg grating B2 are etched in the first half 113 and the second half 114, respectively. The first Bragg grating B1 has a first grating period $\Lambda_1$, and the second Bragg grating B2 has a second grating period $\Lambda_2$ that is different from the first grating period $\Lambda_1$. The first Bragg grating B1 may be approximately equal to the second Bragg grating B2 in axial length. On a radially outer side of the optical fiber cladding 112, an outer coating 115 for improving the strength of the optical fiber sensor may further be provided. In some embodiments, the optical fiber cladding 112 and the outer coating 115 may be omitted.

The remaining optical fiber sensors of the multiple optical fiber sensors 10 may have basically the same structure as the first optical fiber sensor 11, and the multiple optical fiber sensors 10 may be formed by etching multiple pairs of Bragg gratings on the same optical fiber at certain intervals. In order to distinguish the reflected light signals of different Bragg gratings, the Bragg gratings may have operating wavelength ranges that do not overlap with each other. The operating wavelength ranges and the reflected light central wavelengths of the Bragg gratings B1 to B8 in FIG. 1 are exemplarily shown in Table 1. In different embodiments, an appropriate grating operating wavelength range may be selected based on the wavelength range of the light emitted by the light source 20 and the number of the Bragg gratings of the optical fiber sensor 10.

Table 1

| Bragg grating | operating wavelength range (nm) | reflected light central wavelength (nm) |
|---|---|---|
| B1 | 1520~1526 | 1523 |

(continued)

| Bragg grating | operating wavelength range (nm) | reflected light central wavelength (nm) |
|---|---|---|
| B2 | 1526~1532 | 1529 |
| B3 | 1532~1538 | 1535 |
| B4 | 1538~1544 | 1541 |
| B5 | 1544~1550 | 1547 |
| B6 | 1550~1556 | 1553 |
| B7 | 1556~1562 | 1559 |
| B8 | 1562~1568 | 1565 |

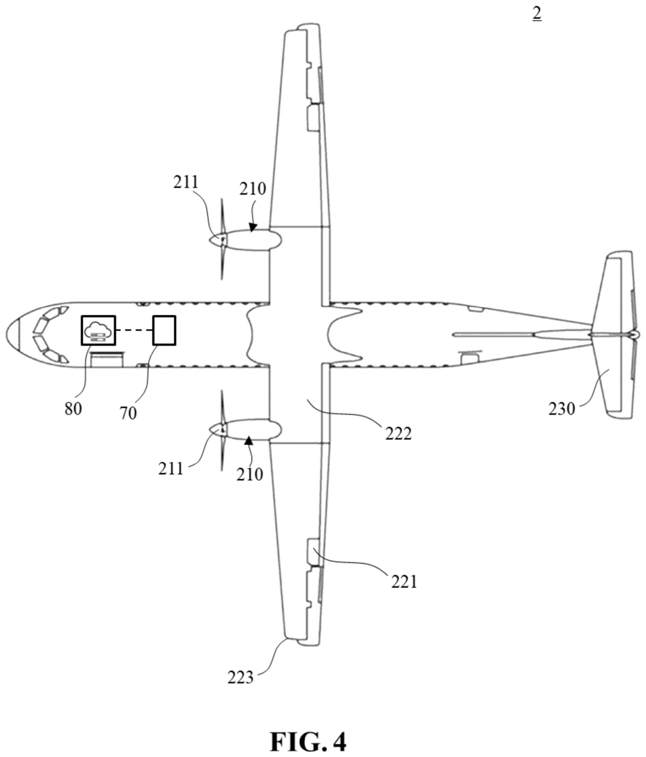

The sensor system 1 according to the present application may be used to measure physical quantities such as deformation amount, temperature, load and the like of an aerofoil. Hereinafter, a rotatable blade 212 and a propeller mechanism 211 including at least one blade 212 will be described as examples of the aerofoil and an aerofoil structure including the aerofoil. In particular, as shown in FIG. 4, the propeller mechanism 211 in this embodiment is configured as a fun of an engine 210 of an aircraft 2. However, it should be understood that the sensor system 1 may also be applied to any other suitable aerofoils that are rotatable or movable, such as blades of helicopter propellers, blades of wind turbines or other rotors, wing movables 221 (e.g., slats, flaps, ailerons, etc.) of the aircraft 2, a tail stabilator 230 of the aircraft 2 and the like. In addition, the sensor system 1 may also be applied to any types of fixed aerofoils, such as a fixed wing 222 and a winglet 223 of the aircraft 2 and the like.

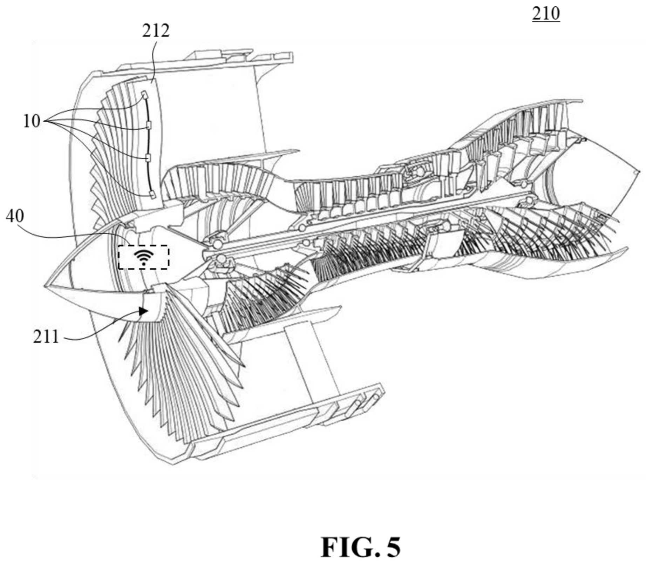

FIG. 4 is a plan view of an aircraft 2 equipped with the sensor system 1, and FIG. 5 is a schematic cutaway perspective view of an engine 210 of the aircraft 2. The optical fiber sensor 10 of the sensor system 1 may be coupled with the blade 212 of the fan of the engine 210 for detecting the deformation amount, temperature, load and the like of the blade 212. Since the deformation amount and temperature at different positions of the blade 212 may be quite different, the multiple optical fiber sensors 10 may be arranged in series with each other, and each of the optical fiber sensors 10 corresponds to a position to be measured to measure this position. As shown in FIG. 5, the multiple optical fiber sensors 10 connected in series with each other are arranged in a substantial radial direction of the blade 212 of the fan to be measured and may rotate together with the blade 212. In this embodiment, the optical fiber sensor 10 may be attached to an outer surface of the blade 212 by bonding or any other suitable ways. The optical fiber sensors 10 share the same light source 20, the optical circulator 30, the signal processing device 40, the data receiving device 70 and the data storage device 80. For example, the light source 20, the optical circulator 30 and the signal processing device 40 may be arranged at or close to a rotation axis of the fan, to prevent linear elements such as optical fibers and wires from winding when the fan rotates. As shown in FIG. 4, the data receiving device 70 and the data storage device 80 may be arranged on the fuselage of the aircraft 2, for example, in the cockpit. In this case, the signal processing device 40, the data receiving device 70 and the data storage device 80 may communicate with each other wirelessly.

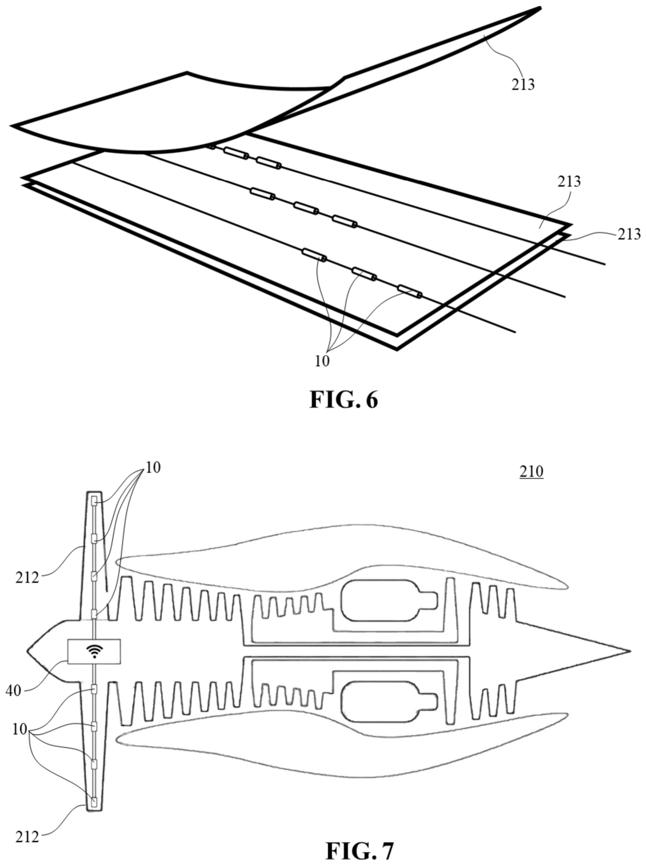

FIG. 6 and FIG. 7 schematically show an alternative arrangement of the optical fiber sensor 10. FIG. 6 schematically shows a manufacturing process of a blade 212 of a fan of the engine 210, and FIG. 7 shows a schematic longitudinal sectional view taken along the central axis of the engine 210 manufactured in a manner shown in FIG. 6. As shown in FIG. 6, the blade 212 of the fan of the engine 210 may be formed by sequentially laminating and bonding multiple composite material layers 213 in a desired shape. During the process of manufacturing the blade 212 in this way, the multiple optical fiber sensors 10 may be arranged between two adjacent composite material layers 213. Therefore, as shown in FIG. 7, the optical fiber sensor 10 is embedded in the blade 212, so the geometric shape of the aerodynamic surface (that is, the outer surface) of the blade 212 will not be changed, and the aerodynamic performance of the blade 212 will not be damaged.

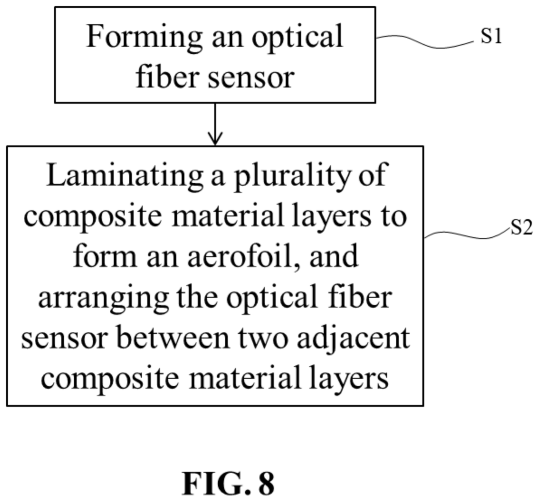

A method for manufacturing an aerofoil with an optical fiber sensor 10 embedded therein is further provided according to another aspect of the present application. The following description will take the blade 212 as a non-limiting example of the aerofoil. FIG. 8 shows a flowchart of the method. With reference to FIG. 1 to FIG. 3 and FIG. 8, step S1 of the method includes forming an optical fiber sensor 10 by etching a first Bragg grating B1 and a second Bragg grating B2 in a first half 113 and a second half 114 of an optical fiber divided by a virtual plane extending in its axial direction, respectively. Etching the grating may be done by ultraviolet light or laser, for example. With reference to FIG. 6 to FIG. 8, step S2 includes sequentially laminating and bonding the multiple composite material layers 213 to form an aerofoil (i.e., the blade 212), so that the optical fiber sensor 10 is arranged between two adjacent composite material layers 213. The method may further include forming multiple optical fiber sensors 10 connected in series with each other in the same optical fiber and arranging the optical fiber between two adjacent composite material layers 213 for forming the aerofoil.

Alternatively, the optical fiber sensor(s) 10 may be arranged in a cavity formed by the aerofoil. The cavity may be machined from the aerofoil once it is manufactured, or may be created during the forming process of the aerofoil.

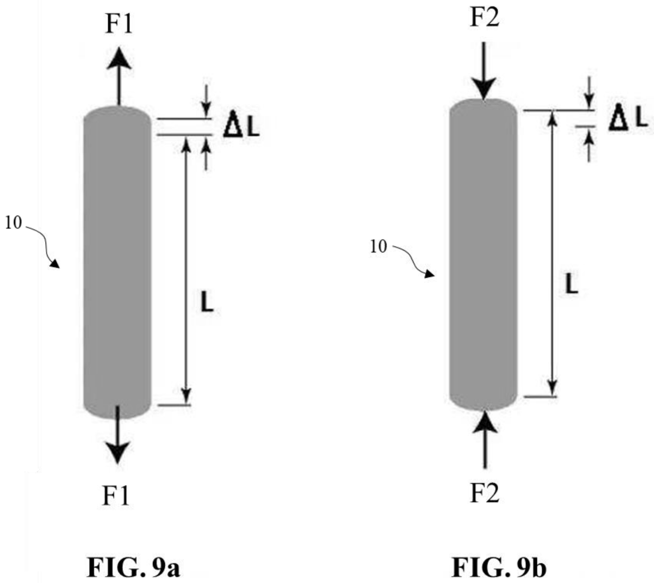

Next, with reference to FIG. 9a and FIG. 9b, the specific operation process and principle of measuring the deformation amount and/or temperature of the blade 212 using the sensor system 1 according to the present application will be described. FIG. 9a is a schematic view of an optical fiber sensor 10 when subjected to a tensile force F1, and FIG. 9b is a schematic view of the optical fiber sensor 10 when subjected to a compressive force F2. As mentioned above, the optical fiber sensor 10 may be attached to the outer surface of the blade 212 or embedded in the blade 212, so the deformation amount ΔL of the optical fiber sensor 10 (that is, the elongation amount of the optical fiber sensor 10 when subjected to the tensile force F1 or the shortening amount when subjected to the compressive force F2) may be regarded as equal to the deformation amount of the blade 212 at a position where the optical fiber sensor 10 is located.

Each optical fiber sensor 10 includes two Bragg gratings with different grating periods. The Bragg grating is a narrow-band filter with a periodic microstructure, and strongly reflects only light with a narrow spectrum near a specific central wavelength (also called a Bragg wavelength). The remaining light waves will continue to pass through the Bragg grating. The central wavelength λ of reflected light satisfies the following Bragg equation:

$$\lambda = 2n\Lambda$$

where n is a refractive index and Λ is a grating period (that is, a distance between two adjacent notches in the Bragg grating).

When the fiber with the Bragg grating is stretched or compressed, the grating period Λ of the Bragg grating will change accordingly. In addition, the sensitivity to the temperature is another characteristic of the Bragg grating. On the one hand, the thermal light effect results in changes in the refractive index n. On the other hand, the thermal expansion of the grating results in changes in the grating period Λ. Since the grating period Λ and the refractive index n are affected by the grating strain and the temperature, the central wavelength of the light reflected by the Bragg grating will also change with the strain and the temperature. Therefore, the change of the corresponding physical quantity at the measurement position may be determined based on the offset of the central wavelength of the reflected light relative to a predetermined initial central wavelength of the reflected light. For example, the central wavelength of the reflected light when the temperature is 0°C and the grating strain is 0 can be determined as the initial central wavelength of the reflected light. The offset Δλ of the central wavelength of the reflected light with respect to the initial central wavelength of the reflected light can be expressed by the following equation (1):

$$\Delta\lambda = K_{\varepsilon}{}^{*}\,\Delta\varepsilon + K_{T}{}^{*}\,\Delta T \qquad (1)$$

where $K_{\varepsilon}$ is a strain coefficient, $\Delta\varepsilon$ is a strain variation of the Bragg grating, $K_{T}$ is a temperature coefficient and $\Delta T$ is a temperature change. Coefficients $K_{\varepsilon}$ and $K_{T}$ can be determined by calibration test.

In an actual measurement process, $\Delta\lambda$ is calculated by the signal processing device 40 based on the reflected optical signal input into it, so $\Delta\varepsilon$ and $\Delta T$ can be calculated reversely according to the equation (1).

Specifically, the light emitted by the light source 20 is transmitted to the first optical fiber sensor 11 among the multiple optical fiber sensors 10 via the first transmission optical fiber 61, the first port 301 and the second port 302 of the optical circulator 30, and the second transmission optical fiber 62. At the first optical fiber sensor 11, the first Bragg grating B1 and the second Bragg grating B2 respectively reflects the first optical signal and the second optical signal near the corresponding central wavelength, and these two reflected optical signals are outputted to the signal processing device 40 via the second transmission optical fiber 62 and the third port 303 of the optical circulator 30. The remaining unreflected light passes through the first optical fiber sensor 11 and is transmitted to the downstream second optical fiber sensor 12, the third optical fiber sensor 13 and the fourth optical fiber sensor 14. When the light passes through each of the downstream optical fiber sensors, each of the optical fiber sensors reflects two optical signals corresponding to the central wavelengths of two Bragg gratings in the optical fiber sensor, and outputs the optical signals to the signal processing device 40 via the second transmission optical fiber 62 and the third port 303 of the optical circulator 30. That is, n optical fiber sensors 10 connected in series output 2n different optical signals to the signal processing device 40. Since the working principle of each of the optical fiber sensors 10 is the same, only the first optical fiber sensor 11 will be described hereinafter as an example.

As shown in FIG. 2, FIG. 3, FIG. 9a and FIG. 9b, when the first optical fiber sensor 11 is extended by tensile force F1 or shortened by compressive force F2, the optical fiber core 111 etched with the first grating B1 and the second Bragg grating B2 is strained, so the central wavelengths of the reflected light corresponding to the first Bragg grating B1 and the second Bragg grating B2 are offset from their initial values. The first Bragg grating B1 and the second Bragg grating B2 are respectively etched in two halves of the same optical fiber, that is, at the same spatial position. Therefore, the first Bragg grating B1 and the second Bragg grating B2 have substantially the same ambient temperature change ΔT, and the same

strain change $\Delta\varepsilon$ when the optical fiber is deformed. Then, the offset $\Delta\lambda_1$ of the central wavelength of the reflected light of the first Bragg grating B1 and the offset $\Delta\lambda_2$ of the central wavelength of the reflected light of the second Bragg grating B2 may be calculated from equation (2):

$$\begin{bmatrix} \Delta\lambda_1 \\ \Delta\lambda_2 \end{bmatrix} = \begin{bmatrix} K_{\varepsilon 1} & K_{T1} \\ K_{\varepsilon 2} & K_{T2} \end{bmatrix} * \begin{bmatrix} \Delta\varepsilon \\ \Delta T \end{bmatrix} \quad (2)$$

where $K_{\varepsilon 1}$ is a strain coefficient of the first Bragg grating B1, $K_{\varepsilon 2}$ is a strain coefficient of the second Bragg grating B2, $K_{T1}$ is a temperature coefficient of the first Bragg grating B1, and $K_{T2}$ is a temperature coefficient of the second Bragg grating B2. These coefficients may be determined, for example, by calibration tests.

The strain change $\Delta\varepsilon$ and the temperature change $\Delta T$ may be calculated from the equation (2), as shown in equations (3) and (4):

$$\Delta\varepsilon = \frac{K_{T2}\Delta\lambda_1 - K_{T1}\Delta\lambda_2}{K_{T2}K_{\varepsilon 1} - K_{T1}K_{\varepsilon 2}} \quad (3)$$

$$\Delta T = \frac{K_{\varepsilon 2}\Delta\lambda_1 - K_{\varepsilon 1}\Delta\lambda_2}{K_{\varepsilon 2}K_{T1} - K_{\varepsilon 1}K_{T2}} \quad (4)$$

Based on the strain change $\Delta\varepsilon$ calculated from the equation (3) and the initial length L of the first optical fiber sensor 11 when no external force is received, the deformation amount $\Delta L$ of the first optical fiber sensor 11 (that is, the deformation amount of the blade 212 at the position where the first optical fiber sensor 11 is located) may be calculated, as shown in equation (5):

$$\Delta L = \Delta\varepsilon * L \quad (5)$$

Similarly, based on the temperature change $\Delta T$ calculated from the equation (4) and the initial value $T_0$ of the temperature at the position to be measured, the current temperature T of the first optical fiber sensor 11 may be determined, as shown in equation (6):

$$T = T_0 + \Delta T \quad (6)$$

Like the first optical fiber sensor 11, the optical signals reflected by the two Bragg gratings in each of the remaining optical fiber sensors may be used to measure the deformation amount of the optical fiber sensor, that is, the deformation amount of the blade 212 at the position where the optical fiber sensor is located, and the temperature of the optical fiber sensor may be measured at the same time.

In addition, based on the strain variation $\Delta\varepsilon$, the load distribution of the blade 212 may also be calculated.

As mentioned above, the sensor system 1 according to the present application can decouple the strain change $\Delta\varepsilon$ and the temperature change $\Delta T$ and calculate them separately, so that the deformation amount $\Delta L$ and the temperature T of the optical fiber sensor 10 at the same spatial position may be measured accurately at the same time, which eliminates the measurement error caused by the offset of the reflected light central wavelength due to the coupling effect of grating deformation and temperature change, and improves the measurement accuracy. In addition, since the two Bragg gratings are integrated in one optical fiber to measure the strain and the temperature at the same time, only one single interrogator may be used to process the optical signals, thus reducing the number of components required by the sensor system, simplifying the wiring of the sensor system, reducing the volume and weight of the sensor system and optimizing the structure of the sensor system.

Since the deformation amount and the temperature of the blades of the propeller mechanism may be quite different at different positions, the multiple optical fiber sensors 10 connected in series with each other may be provided to measure the deformation amount and the temperature at multiple positions at the same time. These optical fiber sensors 10 may share other devices of the sensor system 1, such as the light source 20, the optical circulator 30, the signal processing device 40, the data receiving device 70 and the data storage device 80. This further simplifies the structure of the sensor system.

Preferably, the optical fiber sensor 10 of the sensor system 1 according to the present application may be arranged inside the blade of the propeller mechanism, so that the deformation amount of the blade may be measured without affecting the aerodynamic performance of the blade. Embedding the optical fiber sensor 10 in the blade may also protect the optical fiber sensor 10, enhance the durability of the optical fiber sensor 10 and prolong the service life of the optical fiber sensor 10.

Here, exemplary embodiments of the sensor system, the aerofoil arrangement, the aircraft and the related method according to the present application have been described in detail, but it should be understood that the present application is not limited to the specific embodiments described and shown in detail above. Without departing from the spirit and scope of the present application, those skilled in the art can make various modifications and variations to the present application. All these modifications and variations are within the scope of the present application. Moreover, all the members described herein can be replaced by other technically equivalent members. For example, the sensor system according to the present application may be applied to all types of fixed or rotatable or movable aerofoils, including but not limit to: a aircraft wing, a wing movable such as a flap or slat, a winglet, a tail stabilator, a rotor, a wind turbine blade, etc. In addition, the term "or" in this specification should be understood to mean "and/or".

**Claims**

1. A sensor system (1) for an aerofoil, **characterized by** comprising an optical fiber sensor (10; 11, 12, 13, 14), a light source (20), an optical circulator (30) and a signal processing device (40), wherein:

   the optical fiber sensor (10; 11, 12, 13, 14) is configured to be attached to the aerofoil and comprises an optical fiber core (111), the optical fiber core (111) comprises a first half (113) and a second half (114) divided by a virtual plane extending in an axial direction of the optical fiber core (111), a first Bragg grating (B1) and a second Bragg grating (B2) are etched in the first half (113) and the second half (114) respectively, and the first Bragg grating (B1) and the second Bragg grating (B2) have grating periods different from each other;
   the optical circulator (30) has a first port (301), a second port (302) and a third port (303), wherein the light source (20) is connected to the first port (301), an upstream side of the optical fiber sensor (10; 11, 12, 13, 14) is connected to the second port (302), and the signal processing device (40) is connected to the third port (303);
   the optical fiber sensor (10; 11, 12, 13, 14) is configured to receive light emitted by the light source (20) and reflect an optical signal associated with a central wavelength of the first Bragg grating (B1) and a central wavelength of the second Bragg grating (B2) to the signal processing device (40); and
   the signal processing device (40) is configured to calculate deformation amount and/or temperature of the optical fiber sensor (10; 11, 12, 13, 14) based on the optical signal.

2. The sensor system (1) for the aerofoil according to claim 1, comprising a plurality of optical fiber sensors (10; 11, 12, 13, 14) connected in series with each other, wherein all of the Bragg gratings in the plurality of optical fiber sensors (10; 11, 12, 13, 14) have grating periods different from each other and have operating wavelength ranges that do not overlap with each other.

3. The sensor system (1) for the aerofoil according to claim 1 or 2, wherein the optical fiber sensor (10; 11, 12, 13, 14) is attached to an outer surface of the aerofoil or is embedded inside the aerofoil.

4. The sensor system (1) for the aerofoil according to any one of the preceding claims, wherein the signal processing device (40) comprises a single interrogator configured to convert the optical signal into an electrical signal.

5. The sensor system (1) for the aerofoil according to any one of the preceding claims, wherein the sensor system (1) further comprises a data receiving device (70) and a data storage device (80), wherein the data receiving device (70) is configured to communicate with the signal processing device (40) in a wired or wireless manner to receive data from the signal processing device (40), and the data storage device (80) is configured to communicate with the data receiving device (70) in a wired or wireless manner to store data.

6. The sensor system (1) for the aerofoil according to any one of the preceding claims, wherein the first half (113) and the second half (114) are symmetrical about a central axis of the optical fiber core (111).

7.  The sensor system (1) for the aerofoil according to any one of the preceding claims, wherein the optical fiber sensor (10) further comprises an optical fiber cladding (112) surrounding the optical fiber core (111), and the optical fiber core (111) and the optical fiber cladding (112) are formed of same material,

    optionally, wherein the optical fiber sensor (10) further comprises an outer coating (115) surrounding a radial outer side of the optical fiber cladding (112).

8.  A sensor system (1) for an aerofoil, **characterized by** comprising an optical fiber sensor (10; 11, 12, 13, 14), a light source (20), an optical circulator (30) and a signal processing device (40), wherein:

    the optical fiber sensor (10; 11, 12, 13, 14) is configured to be attached to the aerofoil, the optical fiber sensor (10; 11, 12, 13, 14) is provided with a pair of Bragg gratings (B1, B2) which are arranged in an axial direction and do not overlap with each other in the axial direction, and the pair of Bragg gratings have grating periods different from each other;

    the optical circulator (30) has a first port (301), a second port (302) and a third port (303), wherein the light source (20) is connected to the first port (301), an upstream side of the optical fiber sensor (10; 11, 12, 13, 14) is connected to the second port (302), and the signal processing device (40) is connected to the third port (303);

    the optical fiber sensor (10; 11, 12, 13, 14) is configured to receive light emitted by the light source (20) and reflect an optical signal associated with a central wavelength of each of the pair of Bragg gratings to the signal processing device (40); and

    the signal processing device (40) is configured to calculate deformation amount and/or temperature of the optical fiber sensor (10; 11, 12, 13, 14) based on the optical signal.

9.  An aerofoil arrangement, **characterized by** comprising at least one aerofoil and the sensor system (1) according to any one of claims 1 to 8, wherein the optical fiber sensor (10; 11, 12, 13, 14) of the sensor system (1) is attached to the aerofoil, and the sensor system (1) is configured to detect deformation amount and/or temperature of the aerofoil.

10. The aerofoil arrangement according to claim 9, wherein the aerofoil comprises at least one of: a rotatable blade (212) of a propeller mechanism (211); a wing moveable (221), a fixed wing (222), a winglet (223) and a tail stabilator (230) of an aircraft (2),

    optionally, wherein the aerofoil arrangement is configured as a propeller mechanism (211) comprising at least one rotatable aerofoil, and wherein the signal processing device (40) is arranged at or near a rotation axis of the propeller mechanism (211).

11. An aircraft (2), **characterized by** comprising the sensor system (1) according to any one of claims 1 to 8 or the aerofoil arrangement according to claim 9 or 10.

12. A method for manufacturing an aerofoil, **characterized by** comprising:

    forming an optical fiber sensor (10) by etching a first Bragg grating (B1) and a second Bragg grating (B2) in a first half (113) and a second half (114) of an optical fiber divided by a virtual plane extending in an axial direction, respectively; and

    sequentially laminating and bonding a plurality of composite material layers (213) to form the aerofoil, so that the optical fiber sensor (10) is arranged between two adjacent composite material layers (213).

13. The method according to claim 12, further comprising forming a plurality of optical fiber sensors (10) connected in series with each other in the same optical fiber and arranging the optical fiber between two adjacent composite material layers (213).

14. A method for measuring a deformation amount of an aerofoil, **characterized by** comprising:

    providing an optical fiber sensor (10) at a position to be measured of the aerofoil, wherein the optical fiber sensor comprises an optical fiber core (111) which comprises a first half (113) and a second half (114) divided by a virtual plane extending along an axial direction of the optical fiber core (111), a first Bragg grating (B1) and a second Bragg grating (B2) are etched in the first half (113) and the second half (114) respectively, and the first Bragg grating (B1) and the second Bragg grating (B2) have grating periods different from each other;

    enabling light emitted by the light source (20) to pass through the optical fiber sensor (10);

    receiving a first optical signal reflected by the first Bragg grating (B1) and a second optical signal reflected by the second Bragg grating (B2);

measuring an offset $\Delta\lambda_1$ of a central wavelength of the first optical signal relative to a predetermined initial central wavelength of reflected light of the first Bragg grating (B1), and measuring an offset $\Delta\lambda_2$ of a central wavelength of the second optical signal relative to a predetermined initial central wavelength of reflected light of the second Bragg grating (B2);

calculating a common strain change $\Delta\varepsilon$ of the first Bragg grating (B1) and the second Bragg grating (B2) based on the offset $\Delta\lambda_1$ of the central wavelength of the first optical signal and the offset $\Delta\lambda_2$ of the central wavelength of the second optical signal; and

calculating the deformation amount $\Delta L$ of the aerofoil at the position to be measured based on the strain change $\Delta\varepsilon$,

optionally, wherein the strain change $\Delta\varepsilon$ and the deformation amount $\Delta L$ are calculated from the following equations:

$$\Delta\varepsilon = \frac{K_{T2}\Delta\lambda_1 - K_{T1}\Delta\lambda_2}{K_{T2}K_{\varepsilon 1} - K_{T1}K_{\varepsilon 2}}$$

$$\Delta L = \Delta\varepsilon * L$$

wherein $K_{\varepsilon 1}$ is a strain coefficient of the first Bragg grating (B1), $K_{\varepsilon 2}$ is a strain coefficient of the second Bragg grating (B2), $K_{T1}$ is a temperature coefficient of the first Bragg grating (B1), $K_{T2}$ is a temperature coefficient of the second Bragg grating (B2), and L is an initial length of the optical fiber sensor (10) when no external force is received.

15. A method for measuring temperature of an aerofoil, **characterized by** comprising:

providing an optical fiber sensor (10) at a position to be measured of the aerofoil, wherein the optical fiber sensor comprises an optical fiber core (111) which comprises a first half (113) and a second half (114) divided by a virtual plane extending along an axial direction of the optical fiber core (111), a first Bragg grating (B1) and a second Bragg grating (B2) are etched in the first half (113) and the second half (114) respectively, and the first Bragg grating (B1) and the second Bragg grating (B2) have grating periods different from each other;

enabling light emitted by the light source (20) to pass through the optical fiber sensor (10);

receiving a first optical signal reflected by the first Bragg grating (B1) and a second optical signal reflected by the second Bragg grating (B2);

measuring an offset $\Delta\lambda_1$ of a central wavelength of the first optical signal relative to a predetermined initial central wavelength of reflected light of the first Bragg grating (B1), and measuring an offset $\Delta\lambda_2$ of a central wavelength of the second optical signal relative to a predetermined initial central wavelength of reflected light of the second Bragg grating (B2);

calculating a common temperature change $\Delta T$ of the first Bragg grating (B1) and the second Bragg grating (B2) based on the offset $\Delta\lambda_1$ of the central wavelength of the first optical signal and the offset $\Delta\lambda_2$ of the central wavelength of the second optical signal; and

calculating the temperature T of the aerofoil at the position to be measured based on the temperature change $\Delta T$, optionally, wherein the temperature change $\Delta T$ and the temperature T are calculated from the following equation:

$$\Delta T = \frac{K_{\varepsilon 2}\Delta\lambda_1 - K_{\varepsilon 1}\Delta\lambda_2}{K_{\varepsilon 2}K_{T1} - K_{\varepsilon 1}K_{T2}}$$

$$T = T_0 + \Delta T$$

wherein $K_{\varepsilon 1}$ is a strain coefficient of the first Bragg grating (B1), $K_{\varepsilon 2}$ is a strain coefficient of the second Bragg grating (B2), $K_{T1}$ is a temperature coefficient of the first Bragg grating (B1), $K_{T2}$ is a temperature coefficient of the second Bragg grating (B2), and $T_0$ is an initial value of the temperature at the position to be measured.

**FIG. 1**

FIG. 2

FIG. 3

**FIG. 4**

**FIG. 5**

FIG. 6

FIG. 7

Forming an optical fiber sensor — S1

Laminating a plurality of composite material layers to form an aerofoil, and arranging the optical fiber sensor between two adjacent composite material layers — S2

**FIG. 8**

FIG. 9a

FIG. 9b

Europäisches
Patentamt

European
Patent Office

Office européen
des brevets

## EUROPEAN SEARCH REPORT

**Application Number**

**EP 25 21 8872**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 221 302 634 U (AIRBUS BEIJING ENG CENTRE CO LTD) 9 July 2024 (2024-07-09) | 1-9,11, 14,15 | INV. G01D5/353 |
| Y | * figures 1-4 * <br> * claim 1 * <br> * paragraphs [0004], [0029] - [0049] * <br> ----- | 10,12,13 | |
| X | CN 221 238 575 U (AIRBUS BEIJING ENG CENTRE CO LTD) 28 June 2024 (2024-06-28) | 1-9,11, 14,15 | |
| Y | * figures 1-3 * <br> ----- | 10,12,13 | |
| X | DE 10 2016 214887 A1 (FRAUNHOFER GES FORSCHUNG [DE]; PHOTONIK INKUBATOR GMBH [DE]) 15 February 2018 (2018-02-15) | 1 | |
| A | * figure 1 * <br> * paragraph [0032] * <br> ----- | 2-15 | |
| Y | DE 10 2012 214441 A1 (FRAUNHOFER GES FORSCHUNG [DE]) 20 February 2014 (2014-02-20) <br> * figure 2 * <br> * paragraph [0013] * <br> ----- | 10,12,13 | |
| A | WO 2021/047779 A1 (FRAUNHOFER GES FORSCHUNG [DE]) 18 March 2021 (2021-03-18) * figure 1 * <br> ----- | 1-15 | TECHNICAL FIELDS SEARCHED (IPC) <br><br> G01D <br> G01K <br> G01M <br> B64D |
| A | JP 2006 285234 A (MATSUSHITA ELECTRIC INDUSTRIAL CO LTD) 19 October 2006 (2006-10-19) * figure 3C * <br> ----- | 1-15 | |
| A | US 10 914 646 B2 (OPTILAB LLC [US]) 9 February 2021 (2021-02-09) * figure 3 * <br> ----- | 1-15 | |

The present search report has been drawn up for all claims

| Place of search | Date of completion of the search | Examiner |
|---|---|---|
| Munich | 26 March 2026 | Kuchenbecker, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 8872

This annex lists the patent family members relating to the patent documents cited in  the above-mentioned European search report.
The members are as contained in the European Patent Office EDP file on
The European Patent Office is in no way liable for these particulars which are merely given for the purpose of information.

26-03-2026

| Patent document cited in search report | Publication date | Patent family member(s) | Publication date |
|---|---|---|---|
| CN 221302634 U | 09-07-2024 | NONE | |
| CN 221238575 U | 28-06-2024 | NONE | |
| DE 102016214887 A1 | 15-02-2018 | DE 102016214887 A1 | 15-02-2018 |
| | | EP 3497409 A1 | 19-06-2019 |
| | | JP 6997186 B2 | 17-01-2022 |
| | | JP 2019531487 A | 31-10-2019 |
| | | US 2019170930 A1 | 06-06-2019 |
| | | WO 2018029165 A1 | 15-02-2018 |
| DE 102012214441 A1 | 20-02-2014 | DE 102012214441 A1 | 20-02-2014 |
| | | WO 2014026839 A2 | 20-02-2014 |
| WO 2021047779 A1 | 18-03-2021 | EP 4028720 A1 | 20-07-2022 |
| | | US 2022221373 A1 | 14-07-2022 |
| | | WO 2021047779 A1 | 18-03-2021 |
| JP 2006285234 A | 19-10-2006 | JP 2006285234 A | 19-10-2006 |
| | | US 2006215976 A1 | 28-09-2006 |
| US 10914646 B2 | 09-02-2021 | NONE | |

EPO FORM P0459

For more details about this annex : see Official Journal of the European Patent Office, No. 12/82